# EUROPÄISCHE PATENTSCHRIFT

(11) **EP 3 861 238 B1**
(45) Veröffentlichungstag und Bekanntmachung des Hinweises auf die Patenterteilung: **29.11.2023**
(21) Anmeldenummer: 19789748.1
(22) Anmeldetag: 04.10.2019
(51) Int. Cl.: F16K 99/00

(54) **HYDRAULISCHES MIKROVENTIL**
HYDRAULIC MICROVALVE
MICROSOUPAPE HYDRAULIQUE

(30) Priorität: 04.10.2018 DE 102018124467
(43) Veröffentlichungstag der Anmeldung: 11.08.2021
(73) Patentinhaber: MST Innovation GmbH, 44265 Dortmund (DE)
(72) Erfinder: BARTELS, Frank, 45527 Hattingen (DE); STREICH, Carmen, 45130 Essen (DE)
(74) Vertreter: Tahhan, Nader Isam Mark
(86) Internationale Anmeldenummer: PCT/IB2019/058484
(87) Internationale Veröffentlichungsnummer: WO 2020/070714

(56) Entgegenhaltungen:
- EP-A1- 2 222 959
- EP-A2- 1 679 121
- WO-A1-97/01054
- US-A1- 2005 284 526
- US-A1- 2013 045 144
- US-A1- 2013 299 015
- LI H Q ET AL: "Fabrication of a high frequency piezoelectric microvalve", SENSORS AND ACTUATORS A: PHYSICAL, ELSEVIER BV, NL, Bd. 111, Nr. 1, 1. März 2004 (2004-03-01), Seiten 51-56, XP004489322, ISSN: 0924-4247, DOI: 10.1016/J.SNA.2003.10.013

## Beschreibung

### Einleitung

Die Erfindung betrifft ein Ventil. Insbesondere betrifft die Erfindung ein hydraulisches Ventil.

### Stand der Technik und Nachteile

Ventile sind aus dem Stand der Technik wohlbekannt. Sie dienen dem Schalten von Fluiden (Flüssigkeiten, Gasen), erlauben also das gezielte Durchleiten oder Blockieren von Fluidströmen in Rohrleitungen und dergleichen.

Hierbei wird zwischen passiven und aktiven Ventilen unterschieden. Passive Ventile werden durch den Fluidstrom selber geschaltet, beispielsweise ein Klappenventil, dessen Klappen bei einem Fluidstrom in Durchströmrichtung aufgedrückt, und bei einen entgegengesetzten Fluidstrom gegen den Ventilsitz gedrückt und so verschlossen werden. Aktive Ventile erlauben hingegen ein Schalten unabhängig vom Fluidstrom.

Der Betrieb von aktiven Ventilen kann ebenfalls auf vielfältige Weise geschehen. So sind rein mechanische Ventile bekannt, die mit Kräften betrieben werden, oder elektromechanische Ventile, die zum Betrieb mit Strom versorgt werden müssen. Aktiven Ventilen gemeinsam ist die Notwendigkeit des Vorliegens einer Schaltenergie, welche im Ventil zum Bewegen eines Stellglieds führt. Je nach Position des Stellglieds kann das Fluid dann strömen oder wird blockiert.

Häufig nimmt das Stellglied ohne Energiezufuhr eine Ruheposition ein, die entweder den Fluidfluss erlaubt ("normally open") oder blockiert ("normally closed"). Somit resultiert eine Zuführung von Schaltenergie zum Übergang in einen aktivierten Zustand, der das Ventil je nach Bauform öffnet oder schließt. Ein Unterbrechen der Energiezufuhr resultiert wieder in einer Einnahme des Ruhezustands.

Ein Beispiel für klein bauende aktive Ventile sind auf Piezoaktoren basierende Ventile, bei welchen eine dünne Scheibe aus piezoaktivem Material an der Rückseite einer Membran angeordnet ist. Bei Ansteuern des Piezos mit einer Spannung verändert dieser seine Durchbiegung, und bewegt so die Membran zwischen der geschlossenen und der offenen Position hin und her. Der bei einem solchen Ventil erzielbare Hub und die Druckfestigkeit sind jedoch gering.

Eine weitere, an sich bekannte Art von Schaltenergie ist pneumatischer Druck. Dieser kann verwendet werden, um das Stellglied zwischen den beiden Endpositionen "offen" und "geschlossen" hin und her zu bewegen. Pneumatische Ventile haben u.a. den Vorteil, unempfindlich gegen elektromagnetische Felder zu sein, und lassen sich daher z.B. in der Medizintechnik einsetzen, wenn derartige Felder nutzende bildgebende Verfahren verwendet werden sollen. Sie können einfach aufgebaut werden und sind für eine große Anzahl von Schaltzyklen stabil und zuverlässig. Im Vergleich z.B. zu elektrisch betriebenen Magnetventilen weisen sie einen geringeren Energiebedarf auf, und können sowohl kleiner als auch leichter gebaut werden; auch, da sie keine Metalle umfassen müssen und daher aus Kunststoff hergestellt sein können. Im Gegensatz zu Piezoventilen weisen sie einen deutlich größeren Verstellweg auf. Auch tritt praktisch keine Wärmeentwicklung im Betrieb auf, der zudem äußerst geräuscharm sein kann. Je nach Bauform ist eine besonders einfach zu steuernde Drosselung aufgrund der proportionalen Betriebsweise möglich. WO9701054 offenbart ein Ventil gemäß dem Oberbegriff des Anspruchs 1.

Aufgrund des sich beschleunigenden Trends zur Miniaturisierung besteht auch ein zunehmender Bedarf an miniaturisierten Ventilen. Die vorgenannten piezoangetriebenen Ventile sind zwar gut miniaturisierbar, weisen jedoch den bereits erwähnten, geringen Arbeitshub und geringe Druckfestigkeit auf. Insbesondere im Bereich der pneumatischen Schaltenergie mangelt es generell an miniaturisierten Ventilen.

### Aufgabe der Erfindung und Lösung

Der Erfindung liegt demnach die Aufgabe zugrunde, eine Vorrichtung bereitzustellen, welche die Nachteile des Standes der Technik vermeidet. Der Arbeitshub und die Druckfestigkeit des Ventils sollen verhältnismäßig groß sein. Das Ventil soll in nicht-metallischen Werkstoffen realisierbar sein, und Potenzial zur Miniaturisierbarkeit aufweisen.

Die Aufgabe wird durch ein miniaturisiertes hydraulisches Ventil nach Anspruch 1 sowie ein Verfahren nach Anspruch 13 gelöst. Vorteilhafte Ausführungsformen sind den jeweiligen abhängigen Unteransprüchen, der nachfolgenden Beschreibung sowie den Figuren zu entnehmen.

### Beschreibung

Das erfindungsgemäße aktive miniaturisierte hydraulische Ventil umfasst eine in einem Gehäuse angeordnete Ventilkammer mit mindestens einem Eingang und mindestens einem von diesem verschiedenen Ausgang. Die Ventilkammer wird bei geöffnetem Ventil von Fluid durchströmt, bei geschlossenem Ventil befindet sich Fluid in der Ventilkammer, kann jedoch nicht strömen, da der Eingang und/oder der Ausgang verschlossen sind.

Eine Wand der Ventilkammer umfasst ein in Richtung des Eingangs und/oder des Ausgangs bewegbares Verstellglied. Das Verstellglied ist dazu vorgesehen, den Eingang und/oder den Ausgang wahlweise zu verschließen oder zu öffnen und so die Ventilfunktion bereitzustellen.

Auf der der Ventilkammer gegenüberliegenden Seite der Wand (also auf ihrer Rückseite, welche dem Ein- und Ausgang abgewandt ist) ist eine fluidgefüllte Antriebskammer angeordnet. Auch diese ist dazu eingerichtet, mit einem (Arbeits-)Fluid und insbesondere einer Flüssigkeit befüllt werden zu können. Eine Flüssigkeit ist bevorzugt, da diese nicht kompressibel ist und sich daher besser zur Energie- und Kraftübertragung eignet.

Die Antriebskammer ist nunmehr derart mit einer dem Ventil zugehörigen und zumindest einen funktionellen, optional auch einen baulichen Teil desselben bildenden Mikropumpe lediglich über eine fluidführende Leitung verbunden, so dass durch mittels der Mikropumpe unter Druck setzbarem Arbeitsfluid das Verstellglied auslenkbar ist, wodurch seine Position relativ zum Eingang und/oder Ausgang änderbar ist. Hierfür kommt sowohl ein Über- als auch ein Unterdruck in der Antriebskammer in Betracht. Vorzugsweise ist dies jedoch ein Überdruck, der zu einer Bewegung des Verstellglieds in Richtung des Ein- und/oder Ausgangs führt. "Änderbar" bedeutet insbesondere, dass das Verstellglied so weit an den Eingang und/oder Ausgang annäherbar ist, dass dieser mittels des Verstellglieds verschließbar ist.

Durch Variation des Druckes des Arbeitsfluids ist der Durchfluss des Ventils steuerbar, so dass eine variable Drossel bereitgestellt ist.

Ein aktives Mikroventil der erfindungsgemäßen Art weist eine sehr geringe Baugröße auf, da die erfindungsgemäße Konstruktion sehr einfach gehalten und daher sehr gut miniaturisiert herstellbar ist. Eine Mikropumpe stellt zugleich eine ausreichend hohe Leistung bereit, und zwar sowohl in Bezug auf die Fördermenge, was schnelle Schaltwechsel ermöglicht, als auch in Bezug auf den erzielbaren Druck, was die Druckfestigkeit des Ventils erhöht. Sie kann bidirektional betrieben werden, also den Übergang zwischen den beiden Schaltzuständen aktiv unterstützen. Somit vermeidet die Erfindung die aus dem Stand der Technik bekannten Nachteile.

Die Mikropumpe führt zur Bereitstellung eines einzigen Ventilhubes typischerweise eine Vielzahl von Pumphüben aus.

Wenngleich ein einzelner Pumphub nur eine geringe Menge an Fluid in die oder aus der Antriebskammer pumpt, ist bei entsprechend hoher Frequenz, die beispielsweise im Bereich von einigen Hertz bis einigen zehntausend Hertz liegen kann, in kurzer Zeit eine für den Ventilhub ausreichende Fluidmenge in die Antriebskammer hinein oder aus dieser hinaus förderbar.

Nachfolgend werden verschiedene Ausführungsformen der Erfindung näher beschrieben.

Nach einer Ausführungsform besteht das Verstellglied aus einem elastischen Material wie beispielsweise aus einem Elastomer, oder umfasst dieses. Demnach ist das Verstellglied reversibel dehnbar ausgestaltet, so dass es sich bei Druckerhöhung in der Antriebskammer verwölbt oder ausstülpt und so mit einem dafür vorgesehenen Ventildeckelbereich den Ein- und/oder Ausgang verschließt. Bei Rücknahme des Druckes geht das elastische Verstellglied wieder in eine Ausgangslage zurück, die typischerweise in einem geöffneten Ventil resultiert.

Der Vorteil elastischer Materialien liegt in deren immanenten Fähigkeit, zum Ein- und/oder Ausgang hin eine Dichtfläche bereitzustellen.

Nach einer anderen Ausführungsform besteht das Verstellglied aus einem starren Material wie einem Metall oder einem z.B. thermoplastischen Kunststoff, oder es umfasst ein solches Material. Das bedeutet, dass eine Druckerhöhung in der Antriebskammer zu einem Verschieben des Verstellglieds, jedoch nicht zu einer signifikanten Formänderung desselben führt. Auch das starre Verstellglied umfasst einen Ventildeckelbereich, welcher in ausgelenkter Lage dichtend mit dem Ein- und/oder Ausgang zusammenwirkt. Es ist klar, dass dieser Bereich optionale Dichtmaterialen umfassen kann, um die Dichtwirkung zwischen starrem Verstellglied und im Wesentlichen ebenfalls starrem Ein- und/oder Ausgang zu verbessern.

Der Vorteil starrer Materialien liegt in ihrer praktisch unbegrenzten Haltbarkeit, sowie in der effizienteren Kraftübertragung aus der Antriebskammer in die Ventilkammer, da bei starrem Material kaum Energie aufgrund eigener Verformung verlorengeht.

Das Verstellglied kann beispielsweise als eine elastische Membran ausgestaltet sein. Die Membran kann beispielsweise aus Silikon oder Kautschuk bestehen. Sie kann eine runde oder eckige Form aufweisen. In ihrem Randbereich ist sie so fest mit der Seitenwand der Ventil- und/oder Antriebskammer verbunden, so dass sie im Betrieb mit der Seitenwand verbunden bleibt. Der Vorteil einer Membran liegt insbesondere in ihrem besonders einfachen und daher gut miniaturisierbaren Aufbau.

Das Verstellglied kann auch als ein elastische Elemente zumindest umfassender Faltenbalg bereitgestellt sein. Die elastischen Elemente sind dann an den Knickstellen der einzelnen Lagen des Faltenbalges anzuordnen. Er kann jedoch auch gänzlich aus elastischem Material bestehen. Um eine besser kontrollierbare Verformung zu erreichen, können die Wanddicken so variiert werden, dass sich eher steife und eher elastische Bereiche ergeben, wobei letztere bevorzugt in den Knickstellen angeordnet sein können. Der Vorteil eines Faltenbalges liegt darin, dass er, verglichen mit einer Membran, bei gleicher Druck- oder Volumenänderung in der Antriebskammer einen größeren Stellweg bereitstellen kann. Somit sind weniger Hübe der Mikropumpe nötig, bzw. diese kann schneller schalten.

Nach einer weiteren Ausführungsform ist das Verstellglied als starrer Bolzen ausgestaltet. Der Bolzen, der vorzugsweise einen kreisrunden oder quadratischen Querschnitt aufweist, ist in einer darauf abgestimmten Bohrung in der Wand gelagert. Sind Antriebs- und Förderfluid gleich, oder ist ein Eintrag von Förder- in das Antriebsfluid unproblematisch, so kann auf besondere Dichtmittel oder besonders geringe Toleranzen verzichtet werden. Andernfalls ist durch geeignete, dem Fachmann geläufige Maßnahmen sicherzustellen, dass ein Vermischen der beiden Fluide im Betrieb vermieden wird. Der Vorteil eines starren Bolzens liegt darin, dass er sehr dünn ausgeführt werden kann, so dass schon eine geringe Druckänderung in der Antriebskammer zu einer großen Verschiebung des Bolzens führt. Die ventilkammerseitige Spitze des Bolzens kann tellerartig ausgestaltet sein, um eine größere Dichtfläche in Richtung des Ein- und/oder Ausgangs bereitzustellen.

Das Verstellglied kann so ausgestaltet sein, dass es stirnseitig dichtend mit dem Ein- und/oder Ausgang zusammenwirkt. In diesem Fall ist es vorteilhaft, wenn die Materialpaarungen dieser beiden Flächen (Ventildeckelbereich und Stirnseite des Ein-/Ausgangs) mindestens ein elastisches Material umfassen. Diese Ausführungsform bietet sich insbesondere bei der Verwendung von Membranen an, oder bei Verstellgliedern mit im Verhältnis zum Ein-/Ausgang großem Durchmesser.

Das Verstellglied kann auch so ausgestaltet sein, dass es mantelseitig dichtend mit dem Ein- und/oder Ausgang zusammenwirkt. Das bedeutet, dass der Spitzenbereich des Verstellglieds in die Bohrung, deren Ende den Ein- bzw. Ausgang bildet, eintauchen kann. In diesem Fall kann eine Dichtung auch ohne die vorstehend genannte Materialpaarung erreicht werden, sofern die Überdeckung von Spitzenbereich und Ende der Bohrung ausreichend groß ist, das Verstellglied also ausreichend weit in die Bohrung eintaucht. Diese Ausführungsform bietet sich insbesondere bei bolzenförmigen, starren Verstellgliedern an.

Der Bolzen kann zylinderförmig sein, so dass die Dichtigkeit bei zunehmender Eintauchtiefe immer weiter verbessert und so einstellbar ist. Vorteil dieser Ausführungsform ist die hohe Dichtigkeit auch bei geringem Druck in der Arbeitskammer.

Er kann auch kegel- oder halbkugelförmig sein, so dass die Dichtigkeit erst bei Aufliegen in der Wandung der Bohrung bereitgestellt ist. Eine Einstellbarkeit der Dichtigkeit erfolgt dann ggf. über den Druck in der Arbeitskammer. Vorteilhaft an dieser Ausführungsform ist, dass bei kleinem Arbeitshub eine große Dichtfläche erzielbar ist.

Nach einer bevorzugten Ausführungsform umfasst die Mikropumpe mindestens einen, und bevorzugt mindestens zwei Piezoaktuatoren, und basiert vorzugsweise auf dem Prinzip zweier (oder ggf. mehr) passiv schaltender Ventile, wie beispielsweise aus der Druckschrift EP 2222959 A1 bekannt.

Derartige Mikropumpen arbeiten robust und zuverlässig. Sie ermöglichen einen bidirektionalen Betrieb, sind sparsam im Energieverbrauch und besonders gut miniaturisierbar. Durch Verwendung einer Mikropumpe mit Piezoaktuatoren wird der für Ventile häufig zu geringe Arbeitshub eines Piezoaktuators stattdessen zum Fördern des Fluids in die Arbeitskammer eingesetzt. Auf diese Weise werden die Vorteile von Piezoaktuatoren umfassenden Pumpen auch für hydraulische Mikroventile nutzbar.

Nach einer Ausführungsform ist die Mikropumpe außerhalb des Gehäuses des Ventils angeordnet und mit diesem in geeigneter Weise fluidisch verbunden, beispielsweise mittels eines Schlauches oder eines in einer "fluidischen Leiterplatte" eingebrachten Kanals. Somit wird ein weiterer Vorteil erreicht, da die bauliche Trennung von Betriebsenergie liefernder (Mikropumpe) und Ventilbewegung durchführender Einheit (Ventilgehäuse) insbesondere in Fällen mit stark begrenztem Bauraum am Wirkort vorteilhaft ist.

Nach einer anderen Ausführungsform ist die Mikropumpe in das Gehäuse des Ventils integriert. Das bedeutet, dass Mikropumpe und Ventilgehäuse eine Einheit bilden. Eine fluidische Zuleitung zwischen Mikropumpe und Antriebskammer ist nicht mehr vorhanden, bzw. durch eine im Gehäuse befindliche Leitung, welche von Außen nicht mehr zugänglich und daher auch besonders unempfindlich ist, ersetzt. Der Vorteil einer solchen Ausführungsform besteht in der geringen Baugröße des gesamten Systems, und der Möglichkeit, die Fertigung von Mikropumpe und "passiven" Komponenten des Ventils in einem Arbeitsgang durchzuführen.

Nach einer Ausführungsform umfasst die Mikropumpe ein Reservoir für das Arbeitsfluid. Das bedeutet, dass das Gehäuse der Mikropumpe einen Hohlraum umfasst, der vorzugsweise druckausgeglichen ist (beispielsweise durch faltbare Wände). Dieser Hohlraum ist mit einem Eingang der Mikropumpe verbunden, so dass mittels der Pumpe Arbeitsfluid in Richtung der Antriebskammer förderbar ist, und umgekehrt. Somit ist die Mikropumpe von den Umgebungsbedingungen unabhängig, und es ist jederzeit die volle Kontrolle über Art des Arbeitsfluids möglich.

Nach einer anderen Ausführungsform ist die Mikropumpe zur Entnahme des Arbeitsfluids aus der Umgebung eingerichtet. Ein Reservoir ist demnach nicht nötig. Der Eingang der Mikropumpe ist mit der Umgebung verbunden und kann ihr Arbeitsfluid entnehmen und dieses auch dorthin zurückgeben.

Nach einer Ausführungsform ist das Verstellglied in einer Ruheposition vom Eingang und/oder Ausgang beabstandet, und liegt in einer aktiven Arbeitsposition am Eingang und/oder Ausgang an oder taucht in diesen ein. Diese Ausführungsform wird auch als "normally open"-Ausführungsform bezeichnet, da das Ventil ohne Energiezufuhr offen ist.

Nach einer anderen Ausführungsform liegt das Verstellglied in einer Ruheposition am Eingang und/oder Ausgang an oder taucht in diesen ein, und ist in einer aktiven Arbeitsposition vom Eingang und/oder Ausgang beabstandet. Diese Ausführungsform wird auch als "normally closed"-Ausführungsform bezeichnet, da das Ventil ohne Energiezufuhr geschlossen ist.

Nach einer weiteren, eine Membran als Stellglied umfassenden Ausführungsform ist diese Membran an ihrem Umfang zwischen zwei Hälften des Gehäuses eingeklemmt. Demnach besteht das Gehäuse aus mindestens zwei Teilen, welche aneinander gefügt werden, wobei in der Fügeebene (oder in einer dazu parallelen Ebene) die Membran angeordnet ist. Auf der einen Seite der Membran befindet sich dann die Ventilkammer, der Eingang und der Ausgang, und auf der anderen Seite die Antriebskammer.

Vorzugsweise beträgt der Hub des Verstellglieds 1 µm bis 300 µm, und/oder der Schließdruck des Ventils ist kleiner oder gleich 1,8 bar, und/oder die Mikropumpe ist mit 1 Hz bis 50 kHz betreibbar. Versuche haben ergeben, dass mit einem derartigen Hub, einem derartigen Schließdruck und einer derartigen Frequenz ein großes Spektrum an Anwendungen für hydraulische Mikroventile abdeckbar ist.

Die Erfindung betrifft auch ein Verfahren zum Schalten eines Stroms eines Förderfluids unter Verwendung eines miniaturisierten aktiven hydraulischen Ventils gemäß vorstehender Definition; zur Vermeidung von Wiederholungen wird auf die entsprechenden Teile der Beschreibung verwiesen. Das Verfahren umfasst, neben der Bereitstellung des Ventils, die Schritte:
(i) Fördern eines Antriebsfluids in eine erste Pumprichtung, so dass sich der Druck in der Antriebskammer verändert, wodurch sich das Verstellglied in eine erste Richtung hin zum Ein- und/oder Ausgang bewegt, um so einen ersten Schaltzustand für ein Förderfluid zu erhalten, in welchem das Ventil geschlossen ist und das Förderfluid nicht strömen kann;
(ii) Fördern des Antriebsfluids in eine zweite, entgegengesetzte Pumprichtung, so dass sich der Druck in der Antriebskammer in entgegengesetzter Richtung verändert, wodurch sich das Verstellglied in eine zweite Richtung fort vom Ein- und/oder Ausgang bewegt, um so einen zweiten Schaltzustand zu erhalten, in welchem das Ventil geöffnet ist und das Förderfluid strömen kann.

Erfindungsgemäß wird zum Fördern des Antriebsfluids eine zum Ventil gehörige Mikropumpe verwendet.

Anders ausgedrückt, durch Verändern des Druckes in der Antriebskammer in eine Richtung wird das Verstellglied auf den Ein-/Ausgang zu, und bei Verändern des Druckes in die andere Richtung vom Ein-/Ausgang fortbewegt, wobei die Druckänderung erfindungsgemäß mittels einer Mikropumpe erzielt wird.

Denkbar sind dabei sowohl Ausführungsformen, nach welchen eine Ruheposition dann eingenommen wird, wenn der Druck in der Antriebskammer dem Umgebungsdruck entspricht, als auch Ausführungsformen, nach welchen bei Druckgleichheit die ausgelenkte Position eingenommen wird.

Nach einer Ausführungsform wird der erste oder der zweite Schaltzustand bei Identität von Umgebungsdruck und Druck in der Antriebskammer eingenommen. Das bedeutet, dass - je nach Konstruktion - ein "normally-open" oder "normally-closed" Ventil bereitgestellt ist, welches ohne Energiezufuhr in ebendieser Stellung verharrt, und bei Energiezufuhr, also aktiver Druckerhöhung oder -verringerung, in die jeweils andere Stellung geht.

Denkbar sind außerdem Ausführungsformen, nach welchen sowohl zum Einnehmen der Ruhe- als auch der ausgelenkten Position aktiv ein Druck bereitgestellt sein muss, beispielsweise ein um einen ersten und einen weiteren, noch höheren Wert erhöhten Druck in der Antriebskammer. Analog dazu können auch im Vergleich zum Umgebungsdruck verringerte Drücke eingesetzt werden.

Denkbar sind außerdem Ausführungsformen, nach welchen einer der zuletzt genannten Drücke größer, und der weitere genannte Druck nicht noch höher als der erste, sondern niedriger als der Umgebungsdruck sein muss.

Es ist klar, dass durch Variation des jeweiligen Druckes ggf. der Durchfluss des Ventils steuerbar sein kann, so dass eine variable Drossel bereitgestellt ist. Auch die Dichtigkeit kann mittels des Druckes steuerbar sein, bzw. z.B. an den Druck im Ein- und/oder Ausgang angepasst werden. Insofern sind die vorstehenden ersten und zweiten Schaltzustände als Endpunkte zu verstehen, zwischen denen das erfindungsgemäße Ventil durchaus ebenfalls gewünschte Funktionalitäten bereitstellen kann, die über die eines einfachen 2-Wege-Ventils hinausgehen.

Nach einer weiteren Ausführungsform entnimmt die Mikropumpe das Arbeitsfluid aus einem Reservoir, bzw. sie fördert es in dieses hinein. Das Reservoir ist vorzugsweise in das Gehäuse der Mikropumpe integriert. Auf diese Weise ist ein in sich abgeschlossenes System bereitgestellt, bei welchem jederzeit die volle Kontrolle über die Art des Arbeitsfluids möglich ist.

### Figurenbeschreibung

Nachfolgend wird die Erfindung anhand von Figuren beispielhaft erläutert. Dabei zeigt
- **Figur 1**: eine schematische Schnittzeichnung eines erfindungsgemäßen miniaturisierten hydraulischen Ventils im Ruhezustand;
- **Figur 2**: das Ventil aus Fig. 1 in aktiviertem Zustand;
- **Figur 3**: das Ventil ähnlich der Fig. 1, jedoch mit einem anderen Ventilsitz;
- **Figur 4**: das Ventil gemäß Fig. 3 in aktiviertem Zustand;
- **Figur 5**: das Ventil ähnlich der Fig. 1 mit einem Verstellglied in Form eines Bolzens in geöffnetem Zustand;
- **Figur 6**: das Ventil gemäß Fig. 5 in geschlossenem Zustand;
- **Figur 7**: ein Ventil mit integrierter Mikropumpe.

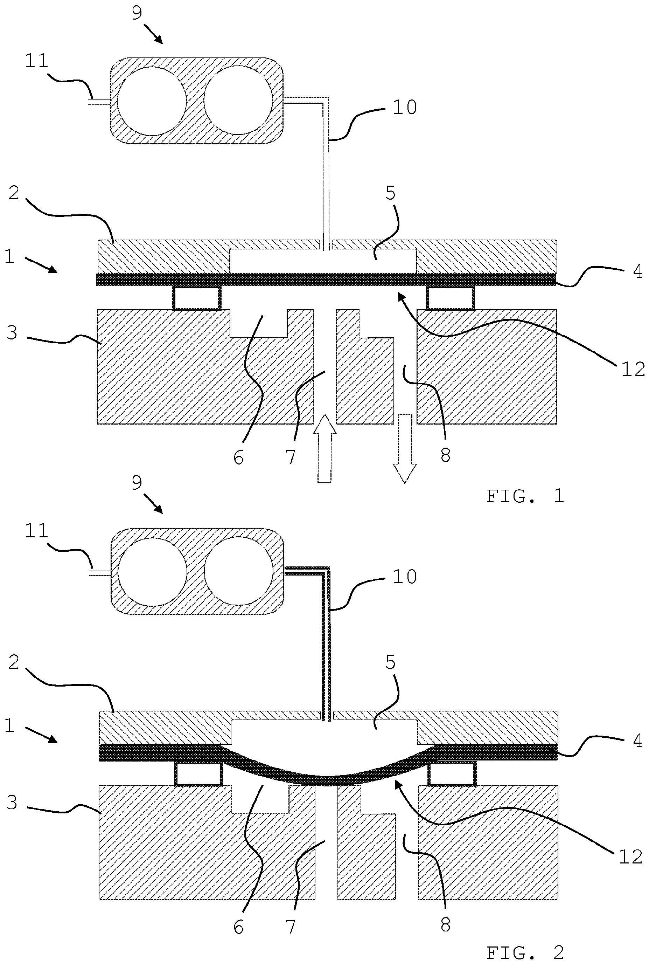

In der **Figur 1** ist eine schematische, nicht maßstäbliche Schnittzeichnung eines erfindungsgemäßen miniaturisierten hydraulischen Ventils in der Ruheposition (zweiter Schaltzustand) dargestellt. Demnach ist das Gehäuse 1 zweigeteilt und weist eine Antriebskammerseite 2 (oben) und eine Ventilkammerseite 3 (unten) auf. Zwischen diesen Seiten ist das als Membran 4 vorliegende Verstellglied eingeklemmt. Der Halbraum oberhalb der Membran ist die Antriebskammer 5, der Halbraum unterhalb der Membran die Ventilkammer 6. In die Ventilkammer 6 führen der Eingang 7 und der Ausgang 8. Die beiden Pfeile ohne Bezugszeichen deuten die Strömungsrichtung des Fluids (nicht dargestellt) an; selbstverständlich ist auch die umgekehrte Strömungsrichtung möglich.

In die Antriebskammer 5 führt außerdem eine fluidführende Leitung 10 der vorliegend außerhalb des Gehäuses 1 angeordneten Mikropumpe 9, deren zwei Piezoaktuatoren durch die Kreise angedeutet sind. Links im Bild ist der elektrische Anschluss 11 der Mikropumpe 9 angedeutet.

Wird nun, wie in **Figur** 2 gezeigt, die Mikropumpe 9 in Betrieb gesetzt, erzeugt sie einen Überdruck, welcher sich durch die nunmehr dicker gezeichnete Leitung 10 fluidisch in die Antriebskammer 5 fortpflanzt. Dort führt er zu einer Verformung der elastischen Membran derart, dass sich diese in Richtung der Ventilkammer 6 verformt, bis sie mit ihrem zentral angeordneten Ventildeckelbereich am Eingang 7 anliegt und diesen fluiddicht verschließt: das Ventil ist in der geschlossenen Arbeitsposition (erster Schaltzustand), das Fluid kann nicht mehr strömen. Dementsprechend fehlen in der Fig. 2 auch die beiden Pfeile im Eingang 7 und Ausgang 8.

Wie aus den beiden Figuren ersichtlich, ist der in die Ventilkammer 6 ragende Endabschnitt des Eingangs 7 erhaben ausgeführt. Auf diese Weise muss der Hub der Membran weniger groß sein, um den Eingang 7 zu verschließen; zudem kann sich die Membran bei entsprechend hohem Pumpdruck um den Endabschnitt herum anschmiegen (nicht dargestellt), was die Dichtigkeit bzw. Druckfestigkeit weiter erhöht.

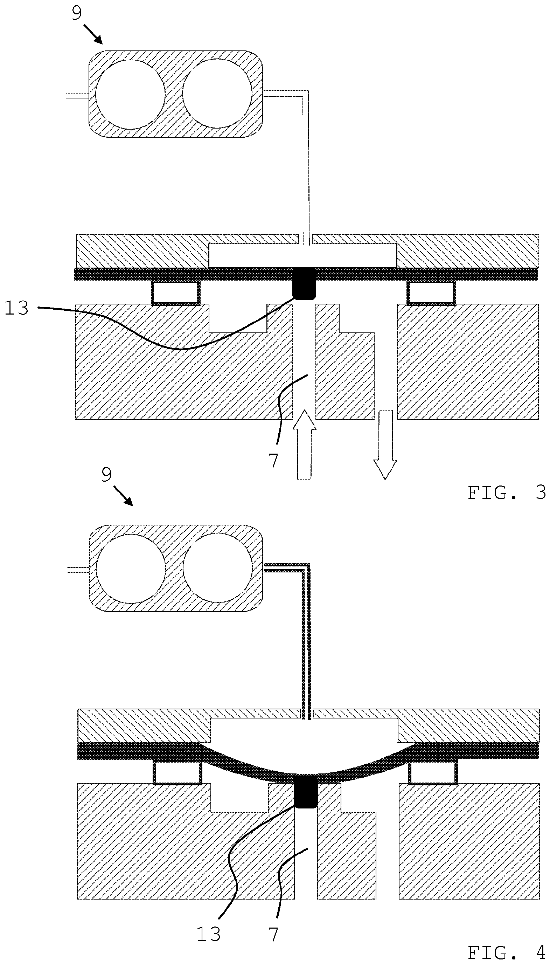

**Figur 3** zeigt ein Ventil ähnlich der Fig. 1, jedoch mit einem anderen Ventilsitz. Die Bezugszeichen sind aus Gründen der Übersichtlichkeit weitgehend weggelassen. Im Unterschied zu der Ausführungsform aus Fig. 1 umfasst die Membran in ihrem zentralen, zur Annäherung an den Eingang 7 vorgesehenen Bereich ein als Dichtglied 13 dienendes Element, welches eine Zylinderform aufweist.

Wie aus **Figur 4** ersichtlich, taucht dieses Dichtglied 13 im aktivierten Zustand des Ventils in den Eingang 7 ein. Dabei dichtet es nicht nur mit der Stirnseite der Membran, sondern insbesondere auch mit der Mantelseite des Zylinders mit dem Eingang 7 ab, was zu einer verbesserten Dichtigkeit führt. Zudem kann diese Ausführungsform, wenn zwischen Mantelfläche und Innenwand der Bohrung des Eingangs 7 bewusst ein Spalt gelassen wird, das Ventil auch eine Drosselfunktion erfüllen, wenn nämlich die Membran nur teilweise ausgelenkt wird, so dass das Dichtglied 13 auch nur teilweise in den Eingang 7 eintaucht. Durch den Spalt kann dann eine bestimmte, steuerbare Menge an Förderfluid strömen.

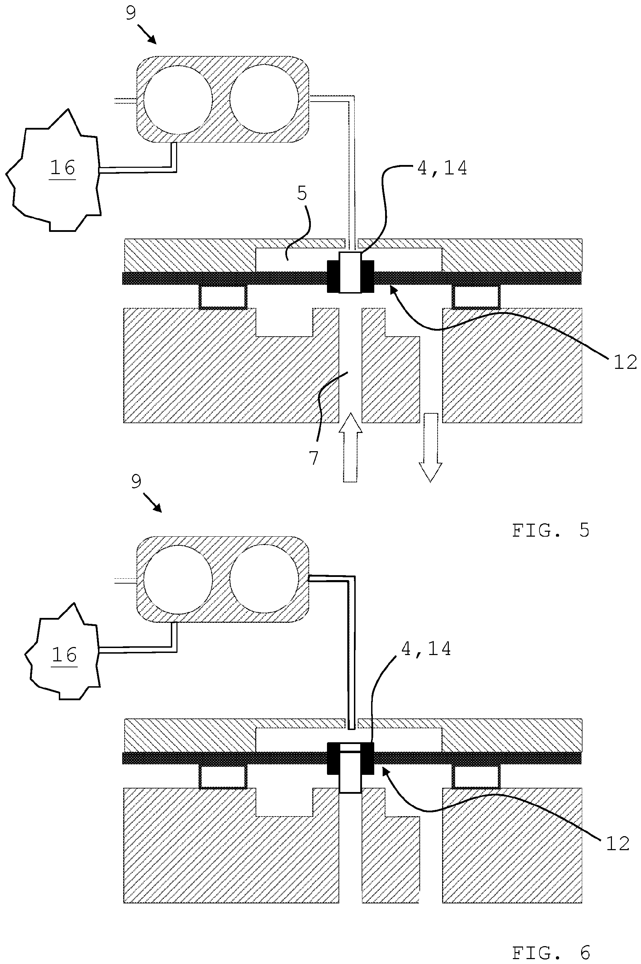

**Figuren 5 und 6** zeigen eine Ausführungsform mit einem als starrer Bolzen 14 ausgebildeten Verstellglied 4. Demnach umfasst die gezeigte Konstruktion keine elastische Membran, sondern der Bolzen 14, der vorzugsweise einen kreisrunden oder quadratischen Querschnitt aufweist, ist in einer darauf abgestimmten Führung in der (starren) Wand 12 gelagert. Durch Erhöhen des Druckes in der Antriebskammer 5 wird der Bolzen 4 in Richtung der Bohrung des Eingang 7 bewegt, bis der diesen dichtend verschließt (Fig. 6), so dass kein Förderfluid mehr strömen kann. Bolzen 4, Führung in der Wand 12 und Bohrung des Eingangs 7 müssen zueinander fluchten.

Angedeutet ist auch ein Reservoir 16, welches außerhalb der Mikropumpe 9 angeordnet ist. Während es in Fig. 5 größer dargestellt ist, da es mehr Arbeitsfluid enthält, ist es in Fig. 6 kleiner gezeichnet.

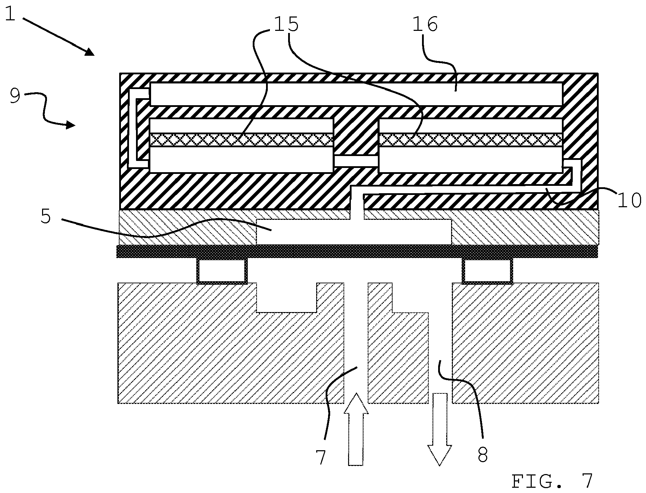

Die **Figur 7** schließlich zeigt schematisch eine Ausführungsform, nach welcher Mikropumpe 9 und Ventil in ein gemeinsames Gehäuse 1 integriert sind. Aus Gründen der Übersichtlichkeit sind nur einige Bestandteile der Mikropumpe 9 dargestellt. Diese umfasst vorliegend zwei Piezoaktuatoren 15, die mittels fluidischer Kanäle (ohne Bezugszeichen) miteinander verbunden sind. Eine fluidführende Leitung 10 (rechts im Bild) der Mikropumpe 9 ist mit der Antriebskammer 5 verbunden. Oberhalb der beiden Kammern, in denen sich die Piezoaktuatoren 15 befinden, ist außerdem ein Reservoir 16 dargestellt, in welchem Arbeitsfluid (nicht gezeigt) bevorratet werden kann. Mittels der Mikropumpe 9 ist dieses aus dem Reservoir 16 in die Antriebskammer 5 förderbar. Die damit einhergehende Volumen- und Druckerhöhung in der Antriebskammer 5 kann dann das Verstellglied 4, das vorliegend in der offenen Position dargestellt ist, in Richtung des Ein- und Ausgangs 7, 8 bewegen, wie in Fig. 2 und Fig. 4 gezeigt.

Nach einer nicht gezeigten Ausführungsform ist das Reservoir 16 außerhalb der integrierten Mikropumpe 9 angeordnet.

Nach einer anderen Ausführungsform entnimmt die Mikropumpe das Arbeitsfluid aus der Umgebung; ein Reservoir ist dann nicht nötig. Eine solche Ausführungsform ist in den Fig. 1 bis 4 angedeutet. Die Fig. 5 und 6 zeigen eine Ausführungsform mit außerhalb der Mikropumpe angeordnetem Reservoir 16.

### Bezugszeichenliste

- 1: Gehäuse
- 2: Antriebskammerseite
- 3: Ventilkammerseite
- 4: Verstellglied
- 5: Antriebskammer
- 6: Ventilkammer
- 7: Eingang
- 8: Ausgang
- 9: Mikropumpe
- 10: Leitung
- 11: Anschluss
- 12: Wand
- 13: Dichtglied
- 14: Bolzen
- 15: Piezoaktuator
- 16: Reservoir

## Patentansprüche

1. Miniaturisiertes aktives hydraulisches Ventil, umfassend ein Gehäuse (1), eine im Gehäuse (1) angeordnete Ventilkammer (6) mit mindestens einem Eingang (7) und mindestens einem von diesem verschiedenen Ausgang (8), wobei eine Wand (12) der Ventilkammer (6) ein in Richtung des Eingangs (7) und/oder des Ausgangs (8) bewegbares Verstellglied (4) umfasst, und wobei auf einer der Ventilkammer (6) gegenüberliegenden Seite der Wand (12) eine fluidgefüllte Antriebskammer (5) angeordnet ist, **dadurch gekennzeichnet, dass** das Ventil eine Mikropumpe (9) umfasst, und dass die Antriebskammer (5) lediglich über eine fluidführende Leitung (10) mit der Mikropumpe (9) verbunden ist, mittels welcher eine für den Ventilhub ausreichende Menge eines Arbeitsfluids in diese Antriebskammer (5) hinein und in entgegengesetzter Richtung aus dieser hinaus förderbar ist, so dass durch mittels der Mikropumpe (9) unter Druck setzbarem Arbeitsfluid das Verstellglied (4) aktiv auslenkbar ist, so dass seine Position relativ zum Eingang (7) und/oder Ausgang (8) änderbar ist, wodurch dieser mittels des Verstellglieds (4) verschließbar ist, wobei durch Variation des Druckes des Arbeitsfluids der Durchfluss des Ventils steuerbar ist, so dass eine variable Drossel bereitgestellt ist.

2. Ventil nach Anspruch 1, wobei das Verstellglied (4) aus einem elastischen Material besteht oder dieses umfasst, oder aus einem starren Material besteht oder dieses umfasst.

3. Ventil nach Anspruch 1, wobei das Verstellglied (4) ausgewählt ist aus der Gruppe bestehend aus einer elastischen Membran, einem mindestens elastische Elemente umfassenden Faltenbalg, und einem starren Bolzen (14).

4. Ventil nach einem der Ansprüche 1 bis 3, wobei die Mikropumpe (9) mindestens einen Piezoaktuator umfasst.

5. Ventil nach einem der Ansprüche 1 bis 4, wobei die Mikropumpe (9) außerhalb des Gehäuses (1) des Ventils angeordnet und mit diesem fluidisch verbunden ist.

6. Ventil nach einem der Ansprüche 1 bis 4, wobei die Mikropumpe (9) in das Gehäuse (1) des Ventils integriert ist.

7. Ventil nach einem der Ansprüche 1 bis 6, wobei die Mikropumpe (9) ein Reservoir (16) für das Arbeitsfluid umfasst.

8. Ventil nach einem der Ansprüche 1 bis 6, wobei die Mikropumpe (9) zur Entnahme des Arbeitsfluids aus der Umgebung eingerichtet ist.

9. Ventil nach einem der Ansprüche 1 bis 8, wobei das Verstellglied (4) in einer Ruheposition vom Eingang (7) und/oder Ausgang (8) beabstandet ist, und in einer aktiven Arbeitsposition am Eingang (7) und/oder Ausgang (8) anliegt oder in diesen eintaucht.

10. Ventil nach einem der Ansprüche 1 bis 8, wobei das Verstellglied (4) in einer Ruheposition am Eingang (7) und/oder Ausgang (8) anliegt oder in diesen eintaucht, und in einer aktiven Arbeitsposition vom Eingang (7) und/oder Ausgang (8) beabstandet ist.

11. Ventil nach einem der vorhergehenden Ansprüche, wobei dasselbe als Verstellglied (4) eine elastische Membran umfasst, welche an ihrem Umfang zwischen zwei Hälften des Gehäuses (1) eingeklemmt ist.

12. Ventil nach einem der vorhergehenden Ansprüche, wobei der Hub des Verstellglieds (4) 1 µm bis 300 µm beträgt, und/oder der Schließdruck des Ventils kleiner oder gleich 1,8 bar ist, und/oder die Mikropumpe (9) mit 1 Hz bis 50 kHz betreibbar ist.

13. Verfahren zum Schalten eines Stroms eines Förderfluids unter Verwendung eines miniaturisierten aktiven hydraulischen Ventils nach einem der vorhergehenden Ansprüche, wobei
- zum Schließen des Ventils ein Fördern eines Antriebsfluids in eine erste Pumprichtung erfolgt, so dass sich der Druck in der Antriebskammer (5) verändert, wodurch sich das Verstellglied (4) in eine erste Richtung hin zum Ein- und/oder Ausgang (7; 8) bewegt, um so einen ersten Schaltzustand für ein Förderfluid zu erhalten, in welchem das Ventil geschlossen ist und das Förderfluid nicht strömen kann;
- zum Öffnen des Ventils ein Fördern des Antriebsfluids in eine zweite, entgegengesetzte Pumprichtung erfolgt, so dass sich der Druck in der Antriebskammer (5) in entgegengesetzter Richtung verändert, wodurch sich das Verstellglied (4) in eine zweite Richtung fort vom Ein- und/oder Ausgang (7; 8) bewegt, um so einen zweiten Schaltzustand zu erhalten, in welchem das Ventil geöffnet ist und das Förderfluid strömen kann;
wobei zum Fördern des Antriebsfluids eine Mikropumpe (9) verwendet wird.

14. Verfahren nach Anspruch 13, wobei
- der erste Schaltzustand bei Identität von Umgebungsdruck und Druck in der Antriebskammer (5) eingenommen wird, oder
- der zweite Schaltzustand bei Identität von Umgebungsdruck und Druck in der Antriebskammer (5) eingenommen wird, oder
- der erste Schaltzustand mit einer im Vergleich zum Umgebungsdruck ersten Erhöhung des Drucks in der Antriebskammer (5), und der zweite Schaltzustand mit einer noch stärkeren Erhöhung desselben erzielt wird, oder
- der erste Schaltzustand mit einer im Vergleich zum Umgebungsdruck ersten Verringerung des Drucks in der Antriebskammer (5), und der zweite Schaltzustand mit einer noch stärkeren Verringerung desselben erzielt wird, oder
- der erste Schaltzustand mit einer im Vergleich zum Umgebungsdruck relativen Erhöhung des Drucks in der Antriebskammer (5), und der zweite Schaltzustand mit einer relativen Verringerung desselben erzielt wird.

15. Verfahren nach einem der Ansprüche 13 oder 14, wobei die Mikropumpe (9) das Arbeitsfluid aus einem Reservoir (16) entnimmt oder es in dieses hineinfördert.

## Claims

1. Miniaturized active hydraulic valve, comprising a valve chamber (6) arranged in a housing (1) and having at least one inlet (7) and at least one outlet (8) being different from the same, wherein a wall (12) of the valve chamber (6) comprises an shifting member (4) movable in the direction of the inlet (7) and/or the outlet (8), and wherein a fluid-filled drive chamber (5) is arranged on a side of the wall (12) opposite the valve chamber (6), **characterized in that** the valve comprises a micro pump (9), and that the drive chamber (5) is connected only by means of a fluid-carrying duct (10) to this micropump (9) by means of which an amount of working fluid being sufficient for the valve stroke can be conveyed into this drive chamber (5) and out of the same in an opposite direction, so that the shifting member (4) can be actively deflected by working fluid which can be pressurized by means of the micropump (9), so that its position can be changed relative to the inlet (7) and/or outlet (8), such that the same can be closed by means of the shifting member (4), wherein by varying the pressure of the working fluid the flow rate of the valve is controllable, so that a variable throttle is provided.

2. The valve of claim 1, wherein the shifting member (4) is made of or comprises an elastic material, or is made of or comprises a rigid material.

3. The valve of claim 1, wherein the shifting member (4) is selected from the group consisting of an elastic diaphragm, a bellows that at least comprises elastic elements, and a rigid pin (14).

4. The valve according to any one of claims 1 to 3, wherein the micropump (9) comprises at least one piezo actuator.

5. The valve according to any one of claims 1 to 4, wherein the micropump (9) is arranged outside the housing (1) of the valve and is fluidically connected thereto.

6. The valve according to any one of claims 1 to 4, wherein the micropump (9) is integrated into the housing (1) of the valve.

7. The valve according to any one of claims 1 to 6, wherein the micropump (9) comprises a reservoir (16) for the working fluid.

8. The valve according to any one of claims 1 to 6, wherein the micropump (9) is arranged to withdraw the working fluid from the environment.

9. The valve according to any one of claims 1 to 8, wherein the shifting member (4) is spaced apart from the inlet (7) and/or outlet (8) in a rest position, and abuts or plunges into the inlet (7) and/or outlet (8) in an active working position.

10. The valve according to any one of claims 1 to 8, wherein the shifting member (4) abuts or plunges into the inlet (7) and/or outlet (8) in a rest position, and is spaced apart from the inlet (7) and/or outlet (8) in an active working position.

11. The valve according to any one of the preceding claims, wherein the same comprises, as a shifting member (4), an elastic diaphragm clamped at its periphery between two halves of the housing (1).

12. The valve according to any one of the preceding claims, wherein the stroke of the shifting member (4) is 1 µm to 300 µm, and/or the closing pressure of the valve is less than or equal to 1.8 bar, and/or the micropump (9) is operable at 1 Hz to 50 kHz.

13. A method of switching a flow of a conveying fluid using a miniaturized active hydraulic valve according to any one of the preceding claims, wherein
- for closing the valve, a delivery of a drive fluid takes place in a first pumping direction, such that the pressure in the drive chamber (5) changes, whereby the shifting member (4) moves in a first direction towards the inlet and/or outlet (7; 8), so as to obtain a first switching state for a conveying fluid, in which the valve is closed and the conveying fluid cannot flow;
- to open the valve, the drive fluid is delivered in a second, opposite pumping direction, so that the pressure in the drive chamber (5) changes in the opposite direction, whereby the shifting member (4) moves in a second direction away from the inlet and/or outlet (7; 8), so as to obtain a second switching state in which the valve is open and the conveying fluid can flow;
wherein a micropump (9) is used to deliver the drive fluid.

14. The method according to claim 13, wherein
- the first switching state is taken when ambient pressure and pressure in the drive chamber (5) are identical, or
- the second switching state is taken when ambient pressure and pressure in the drive chamber (5) are identical, or
- the first switching state is achieved with a first increase of the pressure in the drive chamber (5) compared to the ambient pressure, and the second switching state is achieved with an even greater increase thereof, or
- the first switching state is achieved with a first reduction of the pressure in the drive chamber (5) compared to the ambient pressure, and the second switching state is achieved with an even greater reduction thereof, or
- the first switching state is achieved with a relative increase of the pressure in the drive chamber (5) compared to the ambient pressure, and the second switching state is achieved with a relative decrease thereof.

15. The method of any one of claims 13 or 14, wherein the micropump (9) withdraws the working fluid from or delivers it into a reservoir (16).

## Revendications

1. Soupape hydraulique active miniaturisée, comprenant un boîtier (1), une chambre de soupape (6) agencée dans le boîtier (1) avec au moins une entrée (7) et au moins une sortie (8) différente de celle-ci, dans laquelle une paroi (12) de la chambre de soupape (6) comprend un organe mobile (4) qui peut être déplacé en direction de l'entrée (7) et/ou de la sortie (8), et dans laquelle une chambre d'entraînement (5) remplie de fluide est agencée sur un côté de la paroi (12) opposé à la chambre de soupape (6), **caractérisée en ce que** la soupape comprend une micropompe (9), et **en ce que** la chambre d'entraînement (5) est uniquement reliée à la micropompe (9) par l'intermédiaire d'une conduite (10) transportant le fluide, au moyen de laquelle une quantité d'un fluide de travail suffisante pour la course de soupape peut être transférée à l'intérieur de cette chambre d'entraînement (5) et à l'extérieur de celle-ci dans une direction opposée, de telle sorte que l'organe mobile (4) peut être activement dévié par le fluide de travail qui peut être mis sous pression au moyen de la micropompe (9), de telle sorte que sa position par rapport à l'entrée (7) et/ou à la sortie (8) peut être changée, en sorte que celle-ci peut être fermée au moyen de l'organe mobile (4), dans laquelle le débit de la soupape peut être commandé par une variation de la pression du fluide de travail, de telle sorte qu'un étranglement variable est fourni.

2. Soupape selon la revendication 1, dans laquelle l'organe mobile (4) est constitué d'un matériau élastique ou comprend celui-ci, ou est constitué d'un matériau rigide ou comprend celui-ci.

3. Soupape selon la revendication 1, dans laquelle l'organe mobile (4) est choisi parmi le groupe constitué d'une membrane élastique, d'un soufflet comprenant au moins des éléments élastiques et d'un axe rigide (14).

4. Soupape selon l'une des revendications 1 à 3, dans laquelle la micropompe (9) comprend au moins un actionneur piézoélectrique.

5. Soupape selon l'une des revendications 1 à 4, dans laquelle la micropompe (9) est agencée à l'extérieur du boîtier (1) de la soupape et est fluidiquement reliée à celui-ci.

6. Soupape selon l'une des revendications 1 à 4, dans laquelle la micropompe (9) est intégrée dans le boîtier (1) de la soupape.

7. Soupape selon l'une des revendications 1 à 6, dans laquelle la micropompe (9) comprend un réservoir (16) pour le fluide de travail.

8. Soupape selon l'une des revendications 1 à 6, dans laquelle la micropompe (9) est conçue pour extraire le fluide de travail de l'environnement.

9. Soupape selon l'une des revendications 1 à 8, dans laquelle l'organe mobile (4) est espacé de l'entrée (7) et/ou de la sortie (8) dans une position de repos, et s'applique sur l'entrée (7) et/ou la sortie (8) ou s'enfonce dans celle-ci dans une position de travail active.

10. Soupape selon l'une des revendications 1 à 8, dans laquelle l'organe mobile (4) s'applique sur l'entrée (7) et/ou la sortie (8) ou s'enfonce dans celle-ci dans une position de repos, et est espacé de l'entrée (7) et/ou de la sortie (8) dans une position de travail active.

11. Soupape selon l'une des revendications précédentes, dans laquelle celle-ci comprend une membrane élastique en tant qu'organe mobile (4) qui est coincé au niveau de sa périphérie entre deux moitiés du boîtier (1).

12. Soupape selon l'une des revendications précédentes, dans laquelle la course de l'organe mobile (4) est de 1 µm à 300 µm, et/ou la pression de fermeture de la soupape est inférieure ou égale à 1,8 bar, et/ou la micropompe (9) peut fonctionner de 1 Hz à 50 kHz.

13. Procédé pour inverser un écoulement d'un fluide de refoulement en utilisant une soupape hydraulique active miniaturisée selon l'une des revendications précédentes, dans lequel
- pour fermer la soupape, un refoulement d'un fluide d'entraînement est effectué dans une première direction de pompage, de telle sorte que la pression dans la chambre d'entraînement (5) change, en sorte que l'organe mobile (4) se déplace dans une première direction vers l'entrée et/ou la sortie (7 ; 8), afin d'obtenir ainsi un premier état de commutation pour un fluide de refoulement, dans lequel la soupape est fermée et le fluide de refoulement ne peut pas s'écouler ;
- pour ouvrir la soupape, un refoulement du fluide d'entraînement est effectué dans une seconde direction de pompage, opposée, de telle sorte que la pression dans la chambre d'entraînement (5) change dans la direction opposée, en sorte que l'organe mobile (4) se déplace dans une seconde direction en s'éloignant de l'entrée et/ou de la sortie (7 ; 8), afin d'obtenir ainsi un second état de commutation, dans lequel la soupape est ouverte et le fluide de refoulement peut s'écouler ;
dans lequel une micropompe (9) est utilisée pour refouler le fluide d'entraînement.

14. Procédé selon la revendication 13, dans lequel
- le premier état de commutation est pris lorsque la pression ambiante et la pression dans la chambre d'entraînement (5) sont identiques, ou
- le second état de commutation est pris lorsque la pression ambiante et la pression dans la chambre d'entraînement (5) sont identiques, ou
- le premier état de commutation est atteint avec une première augmentation de la pression dans la chambre d'entraînement (5) par rapport à la pression ambiante, et le second état de commutation est atteint avec une augmentation de celle-ci encore plus importante, ou
- le premier état de commutation est atteint avec une première baisse de la pression dans la chambre d'entraînement (5) par rapport à la pression ambiante, et le second état de commutation est atteint avec une baisse encore plus importante de celle-ci, ou
- le premier état de commutation est atteint avec une augmentation relative de la pression dans la chambre d'entraînement (5) par rapport à la pression ambiante, et le second état de commutation est atteint avec une baisse relative de celle-ci.

15. Procédé selon l'une des revendications 13 ou 14, dans lequel la micropompe (9) extrait le fluide de travail d'un réservoir (16) ou le transfère dans celui-ci.
